# EUROPÄISCHE PATENTANMELDUNG

(11) **EP 2 793 007 A1**
(43) Veröffentlichungstag der Anmeldung: **22.10.2014**
(21) Anmeldenummer: 13002049.8
(22) Anmeldetag: 18.04.2013
(51) Int. Cl.: G01K 15/00, G06F 3/044

(54) **Kalibrator zur Kalibrierung von Temperaturfunktionseinrichtungen**

(71) Anmelder: SIKA Dr.Siebert & Kühn GmbH & Co. KG., 34260 Kaufungen (DE)
(72) Erfinder: Göldner, Michael, 37235 Hessisch-Lichtenau (DE); Friedrichs, René, 37075 Göttingen (DE)
(74) Vertreter: Walther, Walther & Hinz GbR

(57) **Zusammenfassung**

Gegenstand der Erfindung ist ein Kalibrator (1) zur Kalibrierung von Temperaturfunktionseinrichtungen, z. B. von Thermometern oder von thermischen Schaltern, mit einer Eingabe- und Anzeigeeinheit, wobei der Kalibrator (1) einen kapazitiven Touchscreen (4) mit der Eingabe- und der Anzeigeeinheit aufweist.

## Beschreibung

Die Erfindung betrifft einen Kalibrator zur Kalibrierung von Temperaturfunktionseinrichtungen, z. B. von Thermometern oder thermischen Schaltern mit einer Eingabe- und einer Anzeigeeinheit.

Die Aufgabe eines Kalibrators besteht darin, den Bereich der Aufnahme für ein Thermometer oder einen thermischen Schalter auf eine vom Nutzer vorgegebene Temperatur zu erhitzen bzw. zu kühlen und über einen bestimmten Zeitraum konstant zu halten. Hierzu ist erforderlich, dass dem Kalibrator bzw. der Steuer- und Regeleinheit des Kalibrators bestimmte Informationen eingegeben werden, wie z. B. Solltemperatur oder die Regelparameter für die Regelung der Temperatur auf einem vorgegeben Niveau. Zur Eingabe solcher Informationen ist bekannt, auf dem Kalibrator eine gewisse Anzahl von Tasten, die sich auf einem oder mehreren Tastenfeldern befinden können, vorzusehen. Während des Kalibriervorganges bzw. auch bereits während der Eingabe der Daten ist die Anzeige der entsprechenden Daten erforderlich. Hierzu ist die Anordnung eines Displays auf dem Kalibrator bekannt. Festzuhalten ist somit, dass der Kalibrator zwei unterschiedliche Kommunikationseinrichtungen aufweist, um dem Nutzer die Kommunikation zwecks Dateneingabe und Datenkontrolle zu ermöglichen.

Dies hat verschiedene Nachteile. So ist unter anderem festzuhalten, dass gut lesbare Ein- und Ausgabeeinheiten eine relativ große Fläche auf dem Kalibrator benötigen, die oftmals nicht zur Verfügung steht. Darüber hinaus ist die Anordnung insbesondere von Displays als Anzeigeneinheiten auf einem Kalibrator häufig dadurch eingeschränkt, dass solche Displays nur dort auf dem Gehäuse des Kalibrators angebracht werden können, wo die Temperaturen nicht allzu hoch sind. Darüber hinaus haben Regions- und insbesondere sprachspezifische Konfigurationen der Eingabeeinheit, z. B. Tasten mit arabischen oder chinesischen Schriftzeichen immer auch eine unterschiedliche Hardware zur Folge, was dann aufgrund der Vielzahl der unterschiedlichen Kalibratorausführungen höhere Kosten zur Folge hat. Des Weiteren ist nicht zu verkennen, dass mechanische Tastaturen zur Eingabe der Daten für den Kalibriervorgang durch Gebrauch mehr oder weniger schnell verschleißen, wobei der Begriff des Verschleißens auch beinhaltet, dass sich die Beschriftungen der Tastatur abnutzen und es dadurch zur Folge zu Fehlbedienungen kommen kann.

Die der Erfindung zugrunde liegende Aufgabe besteht demzufolge darin, hier Abhilfe zu schaffen. Insbesondere soll sowohl die Eingabe- als auch die Anzeigeeinheit gut lesbar sein, die Zeichen der Eingabe- und Anzeigeeinheit in beliebigen Sprachen darstellbar sein, und darüber hinaus die Eingabe- und die Anzeigeneinheit im Wesentlichen verschleissfrei ausgebildet sein.

Zur Lösung der Aufgabe wird erfindungsgemäß vorgeschlagen, dass bei einem Kalibrator zur Kalibrierung von Temperaturfunktionseinrichtungen wie z. B. Thermometern und Schaltern ein kapazitiver Touchscreen mit mindestens einer Ein(gabe)- und einer Anzeigeeinheit vorgesehen ist. Ein solcher kapazitiver Touchscreen hat gegenüber einem resistiven Touchscreen den Vorteil, dass dieser unempfindlich ist gegenüber äußeren Einflüssen. In diesem Zusammenhang bleibt darauf hinzuweisen, dass in den Kalibrierbädern der Kalibratoren häufig Silikonöle Verwendung finden, die die Beschichtung bei einem resistiven Touchscreen, meistens eine Polyesterschicht, angreifen. Darüber hinaus ist eine Kunststoffoberfläche verhältnismäßig kratzempfindlich. Ein kapazitiver Touchscreen zeigt eine Glasoberfläche auf, die unempfindlich ist gegenüber Silikonölen und auch im Wesentlichen kratzunempfindlich.

Allerdings hat ein solcher kapazitiver Touchscreen den Nachteil, dass er gegenüber elektromagnetischen Wellen äußerst störanfällig ist. Die Störanfälligkeit eines solchen kapazitiven Touchscreen kann soweit gehen, dass eingegebene Werte für den Kalibriervorgang geändert werden. Um die Störanfälligkeit aufgrund elektromagnetischer Störungen während des Kalibriervorganges zu vermindern, ist nach einem besonderen Merkmal der Erfindung vorgesehen, dass die Eingabeeinheit während des Kalibriervorganges zumindest teilweise deaktiviert bzw. gesichert ist. Die Aktivierung bzw. die Deaktivierung der Eingabeeinheit kann hierbei auf verschiedene Weise erreicht werden. Zum einen besteht die Möglichkeit ein Tastenfeld auf dem Touchscreen vorzusehen, über das die Aktivierung bzw. auch die Deaktivierung der Eingabeeinheit erfolgt, das nicht deaktivierbar ist. Darüber hinaus besteht die Möglichkeit den Touchscreen mit einem Timer zu versehen, wobei nach Ablauf einer vorbestimmten Zeit in der keine Daten eingegeben werden, die Eingabeeinheit zumindest teilweise in einem deaktivierten bzw. gesicherten Modus überführt wird. Denkbar ist auch die Kombination eines Tastenfeldes zur Aktivierung oder auch Deaktivierung der Eingabeeinheit mit einem Timer, was bedeutet, dass wenn innerhalb eines bestimmten Zeitraumes keine Dateneingabe in die Eingabeeinheit erfolgt, sich die Eingabeeinheit automatisch deaktiviert. Die Aktivierung der Eingabeeinheit erfolgt dann entweder ebenfalls automatisch nach Ablauf des Kalibriervorganges, oder aber manuell über ein Tastenfeld auf dem Touchscreen, das nicht deaktiviert ist.

Zur Aktivierung oder Deaktivierung der Eingabeeinheit kann nach einer weiteren Ausführungsform der Touchscreen an zwei verschiedenen Stellen zugleich oder zeitlich versetzt berührt werden. Eine solche Zweihandbedienung beugt insbesondere einer unbeabsichtigten Aktivierung der Eingabeeinheit vor. Gleiches gilt für die Alternative, wonach zur Aktivierung oder Deaktivierung der Touchscreen an einer oder mehreren Stellen über einen längeren Zeitraum konstant und/oder mehrmals berührt wird.

Die Eingabeeinheit ist vorzugsweise als Bedienfeld mit einzelnen Tastenfeldern auf dem Touchscreen ausgebildet.

Um während der Eingabe der Daten für den Kalibriervorgang eine Übersicht über die eingegebenen Daten zu erhalten kann vorgesehen sein, die Eingabe- und die Anzeigeeinheit parallel auf dem Touchscreen anzuzeigen.

Denkbar ist ebenfalls, während der Deaktivierung der Eingabeeinheit auf der Anzeigeeinheit die Daten wesentlich vergrößert auf dem Touchscreen darzustellen, wohingegen während der Eingabe von Daten in die Eingabeeinheit, die Daten durch die Anzeigeeinheit nicht oder wesentlich verkleinert dargestellt werden. Das heißt, dass jeweils dort wo auf dem Touchscreen eine aktive Handlung vorgenommen wird, bzw. der Touchscreen nur eine Funktion hat, nämlich beispielsweise die Anzeige von Daten während des Kalibriervorganges, die Tastenfelder für die Eingabe entweder wesentlich vergrößert dargestellt sind, oder aber die Daten während des Kalibriervorganges vergrößert dargestellt werden. Das kann wie bereits ausgeführt parallel erfolgen, wobei die Eingabe- oder die Anzeigeeinheit, der jeweils die höhere Priorität zukommt, in der entsprechend vergrößerten Darstellung gezeigt ist.

Nach einem vorteilhaften Merkmal der Erfindung ist es des Weiteren vorgesehen, dass durch die Recheneinheit des Touchscreens die Temperaturregelung vorgenommen wird.

Anhand der Zeichnungen wird die Erfindung beispielhaft näher erläutert.

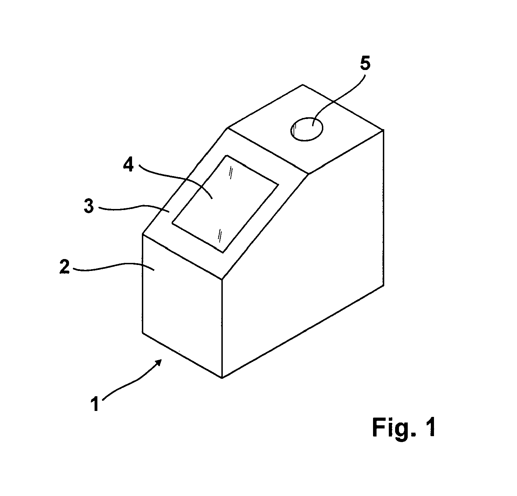

So ist in der einzigen Figur ein Kalibrator 1 dargestellt, wobei der Kalibrator 1 ein Kalibratorgehäuse 2 eine Aufnahme 5 für Temperaturfunktionseinrichtungen und eine schräge Fläche 3 aufweist, wobei auf der schrägen Fläche 3 der Touchscreen 4 angeordnet ist. Der Touchscreen 4 kann einmal als Eingabeeinheit, als Anzeigeeinheit oder als Kombination aus Eingabeeinheit und Anzeigeeinheit ausgebildet sein, wobei die Größenverhältnisse zwischen Eingabeeinheit einerseits und Anzeigeeinheit andererseits davon abhängig sind, ob sich der Kalibrator im Kalibriermodus oder im Eingabemodus befindet.

### Bezugszeichenliste:

| | |
|---|---|
| 1 | Kalibrator |
| 2 | Kalibratorgehäuse |
| 3 | Fläche auf Kalibratorgehäuse |
| 4 | kapazitiver Touchscreen |
| 5 | Aufnahme für Temperaturfunktionseinrichtungen |

## Patentansprüche

1. Kalibrator (1) zur Kalibrierung von Temperaturfunktionseinrichtungen, z. B. von Thermometern oder von thermischen Schaltern, mit einer Eingabe- und Anzeigeeinheit,
**dadurch gekennzeichnet,**
**dass** der Kalibrator (1) einen kapazitiven Touchscreen (4) mit der Eingabe- und der Anzeigeeinheit aufweist.

2. Kalibrator (1) nach Anspruch 1,
**dadurch gekennzeichnet,**
**dass** die Eingabeeinheit während des Kalibriervorganges zumindest teilweise deaktiviert ist.

3. Kalibrator (1) nach Anspruch 2,
**dadurch gekennzeichnet,**
**dass** die Aktivierung oder Deaktivierung durch ein Tastenfeld auf dem Touchscreen (4) erfolgt, das nicht deaktivierbar ist.

4. Kalibrator (1) nach einem der voranstehenden Ansprüche,
**dadurch gekennzeichnet,**
**dass** die Eingabeeinheit als Bedienfeld mit einzelnen Tastenfeldern auf dem Touchscreen (4) ausgebildet ist.

5. Kalibrator (1) nach einem der voranstehenden Ansprüche,
**dadurch gekennzeichnet,**
**dass** die Eingabe- und die Anzeigeeinheit parallel auf dem Touchscreen (4) während der Eingabe von Daten aufgezeigt werden.

6. Kalibrator (1) nach einem der Ansprüche 2 bis 4,
**dadurch gekennzeichnet,**
**dass** während der Deaktivierung der Eingabeeinheit, durch die Anzeigeeinheit die Daten wesentlich vergrößert auf dem Touchscreen (4) darstellbar sind, wohingegen während der Eingabe von Daten in die Eingabeeinheit die Daten durch die Anzeigeeinheit nicht oder wesentlich verkleinert darstellbar sind.

7. Kalibrator (1) nach einem der Ansprüche 2 bis 6,
**dadurch gekennzeichnet,**
**dass** der Touchscreen (4) einen Timer aufweist, wobei nach Ablauf einer vorbestimmbaren Zeit, in der keine Daten eingegeben werden, die Eingabeeinheit zumindest teilweise deaktiviert ist.

8. Kalibrator (1) nach einem der Ansprüche 2 bis 6,
**dadurch gekennzeichnet,**
**dass** zur Aktivierung oder Deaktivierung der Eingabeeinheit der Touchscreen (4) an zwei verschiedenen Orten zugleich oder zeitlich versetzt berührt wird.

9. Kalibrator (1) nach einem der Ansprüche 2 bis 6,
**dadurch gekennzeichnet,**
**dass** zur Aktivierung oder Deaktivierung der Touchscreen (4) an einer oder mehreren Stellen über einen längeren Zeitraum konstant und/oder mehrmals berührt wird.

10. Kalibrator (1) nach einem der voranstehenden Ansprüche,
**dadurch gekennzeichnet,**
**dass** durch die Rechnereinheit des Touchscreens (4) die Temperaturregelung des Kalibrators vorgenommen wird.
